# EUROPEAN PATENT APPLICATION

(11) **EP 1 367 523 A1**
(43) Date of publication of application: **03.12.2003**
(21) Application number: 03253196.4
(22) Date of filing: 22.05.2003
(51) Int. Cl.: G06F 17/60

(54) **A procurement system**

(30) Priority: 24.05.2002 GB 0212066
(71) Applicant: Cutcost.com Limited, London, WC1H 0QA (GB)
(72) Inventor: Moss, Brian Frederick, Blackheath, London SE3 0ES (GB)
(74) Representative: Johnson, Terence Leslie

(57) **Abstract**

The invention elates to a system 1 which provides the technical effect of omitting the need for physical or hard copy catalogues or brochures in order to procure or order goods or services such as necessary office requisites. The system 1 is a computer based system which utilises a central computer or server 2 which holds/stores/or has access to data provided by a plurality of remote and separate suppliers (6, 7, 8, 9) and which data is accessible from and by remote individual users (3, 4, 5), the data being accessible by the click of a mouse. The system provides for ordering of "favourites", which can be fragmented into individual suppliers for checking purposes by the user (3, 4, 5).

## Description

The invention relates to a procurement system, particularly to a system for obtaining a required or desired product or service.

Businesses, including offices, shops, warehouses, garages etc., or private individuals often require to purchase particular items or services, for example office supplies. There is often a myriad of suppliers of, say office products or requisites, which products or requisites may often vary in price, quality, delivery time, discounts available, or any combination of these.

Consequently, businesses often do not acquire the most competitive value product or service, with the result that their business is often rendered uncompetitive as compared to that of a competing business.

It is accordingly an object of the invention to seek to mitigate this disadvantage.

According to this invention there is provided a computer-based system for procuring a product or service, comprising a central computer, one or more remote stations with access to a data base stored on the computer, and an electronic means for selecting direct delivery for a desired product or service from the data base.

Thus using the invention, it is possible to provide a system where a central provider provides access to a range of products and/or services in a plurality of fields, and a user can, on payment of a subscription, obtain a product or service at a favourable price. Alternatively, no subscription is payable, a central provider being remunerated on a commission basis by a source product or service supplier on receipt of an order from the central computer of the central provider. Stated in another way, there is provided an electronic search facility, an order header facility and a selection facility, whereby when an order header is elected from a key field from an original order, order headers and selection criteria are matched and displayed, at the user station.

A system embodying the invention is hereafter described by way of example, with reference to the accompanying drawings.
Fig. 1 shows a schematic layout of a system according to the invention;
Fig. 2 shows a schematic layout of one particular screen of a user station of the system of Fig. 1 showing, via the internet or the world-wide web, an example of areas currently covered by the web site;
Fig. 3 shows another screen of a system according to the invention; and
Figs. 4 and 5 shows a screen in operation.

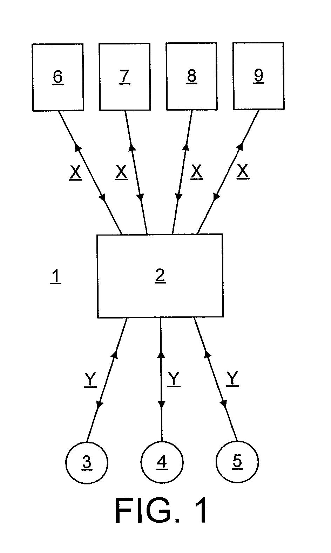

Referring to the drawings, Fig. 1 shows a computer based system 1 according to the invention for producing a product or service, in the embodiment the supply of office supplies or requisites. The system 1 comprises a central computer or server and one or more remote user stations such as separate businesses 3 - 5, each of which has access to data from a plurality of suppliers 6, 7, 8, 9, which data is stored in the central computer or server, and an electronic means for selecting a desired product or server from the data base for direct delivery. Thus using the invention, the technical effect is achieved by a user in a business or workplace not having to leave that workplace to obtain supplies. All suppliers are essentially "on site", by virtue of the system. This can greatly reduce cost by shortening supply chains and provides for "smart" sourcing, with up to 65% and more being saved on a historic purchasing "spend".

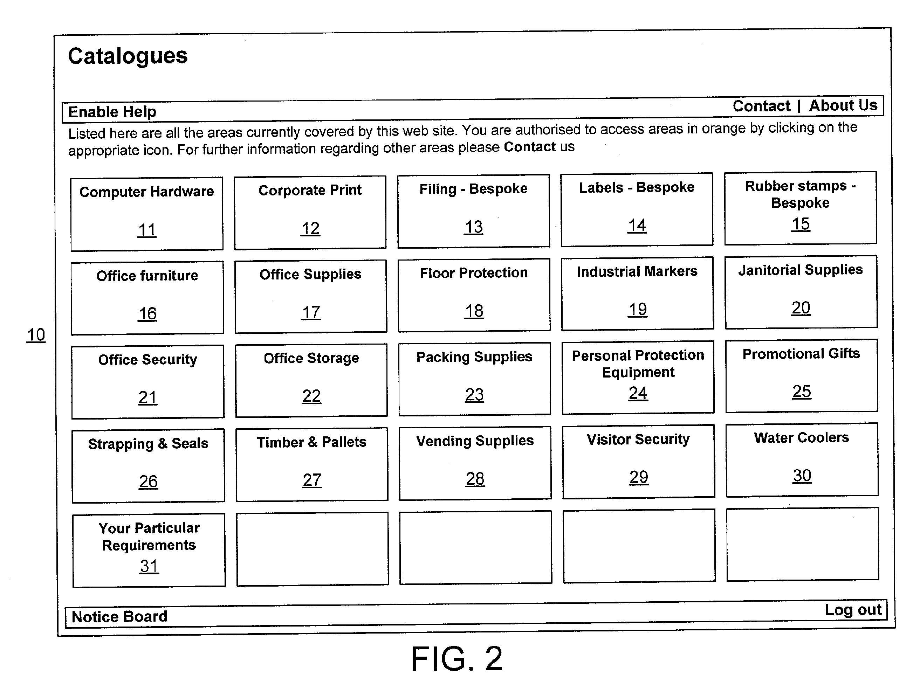

Referring now to Fig. 2, the schematic screen 10 displayed illustrates icons 18-31 relating to various categories, which when "clicked on" by a mouse (in an authorized area, indicated say by a colour such as orange) a user can access information which relates to a particular range of products, for example office supplies 17.

The central computer or server which stores data concerning office equipment, including makes/brands, costs, description, etc. as provided by the plurality of independent data bases 6-9 each of which is dedicated to a particular supplier. There may be 'n' such data bases/suppliers four being shown for simplicity. The users 3-5 of the system 1 which may be separate departments in a single business, or separate businesses, or combinations of these, access data for the suppliers 6-9 via the central computer/server 2, which is remote from both. There is also a two way flow of data/information between the suppliers and the central computer/server as indicated by the arrows X and between the central computer/server and the users as indicated by the arrows Y.

It is also an advantage of this system that once a particular category such as office supplies is selected, favourites within that category can be selected, and moreover, a particular characteristic in a category can be fragmented, to provide say a plurality of supplies of the product at the best price.

The user may be a member of the system, as described previously, or may be a sample user. In either case, all products and services can be tailored to the needs of each member or user.

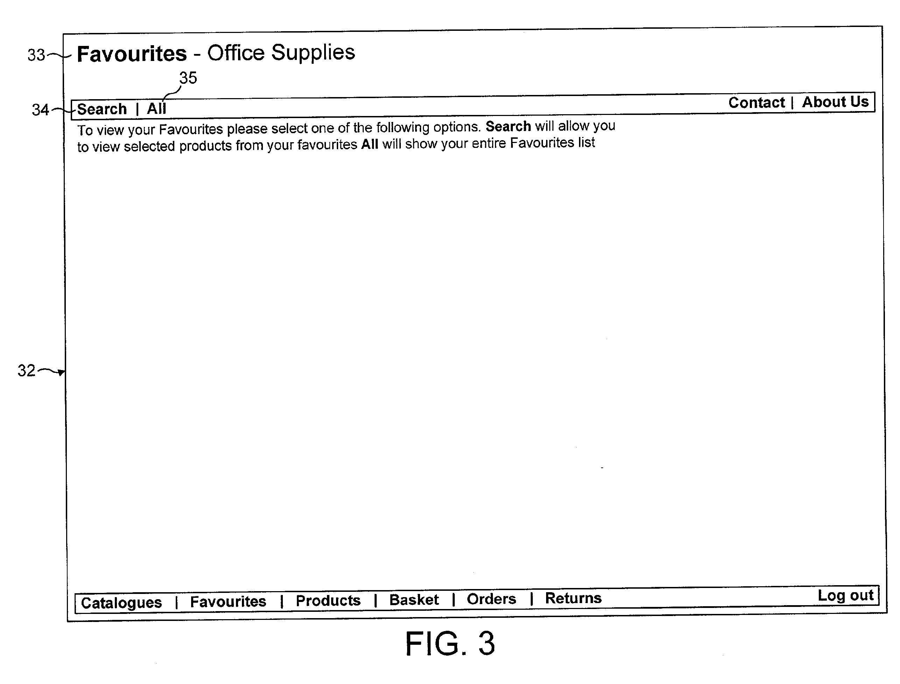

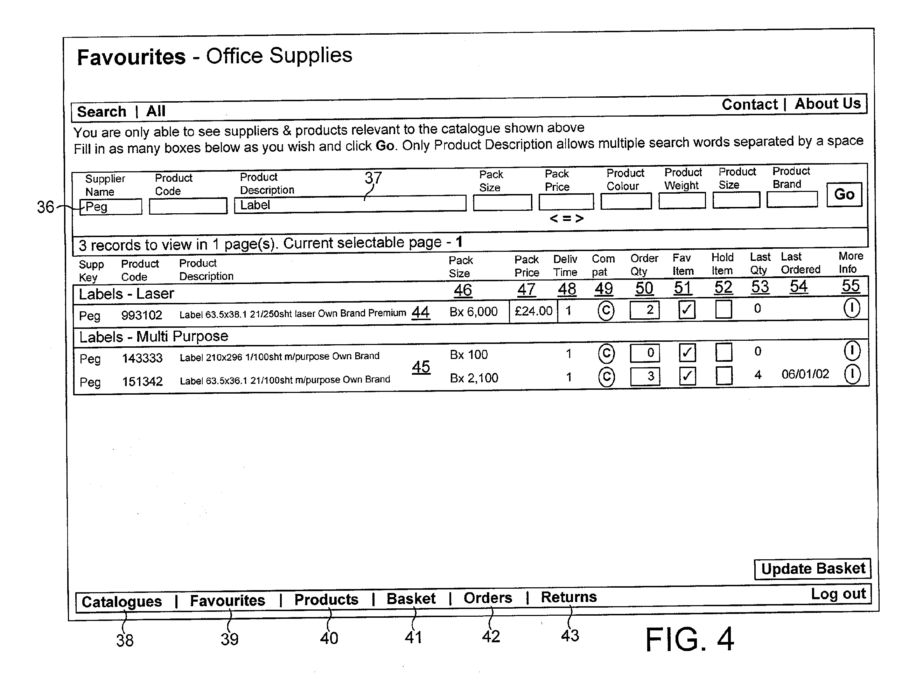

Turning now to Fig. 3 and 4 show a screen 32 of the central computer/server which shows favourites in the field of office suppliers, the 'favourites' of a particular user being stored in the form of data in the central computer/server, and being able to be searched for selected products, 34 or all products 35. Fig. 11 shows a favourite screen 32 as suppliers 36 and product description 37 relevant to an electronic catalogue 38. In that regard, every screen such as 32 has a bar with options catalogues 38, favourites 39, products 40, basket 41, orders 42, and returns 43. Thus in the example, favourites having been selected, the products - labels - are itemized at 44, 45, with information as to pack size 40 (of the labels) 47, delivery time (1 day) 48, computer order 49, quantity 50, favourite item 51 identified automatically, held item 52, last quantity 53 and last order data 54, and more information 55. Thus by clicking on with electronic means such as a mouse the user has an immediate access to catalogues 38, whether hard copy or electronic, held on the computer 2, "favourites" 39, i.e. the items which are most commonly ordered, products 40, which allows browsing of a whole product range, a basket 41, which is the electronic equivalent of a shopping basket and allows desired products 40 to be "collected" electronically in one "place" and then to place an order at 42. Finally, when a product is rejected or is to be returned for any reason, that product may be identified and returned via a click on the "return" bar 43.

It will be understood that each of the keys 38-43 when clicked on using the mouse, bring up a particular dedicated screen and a user 3, 4and 5, so that that user can perform a selection on purchasing or procuring operation. The "production" screen is shown for simplicity.

It will be understood that a system embodying the invention provides a procurement system as tool. The data relating to catalogues is provided by different categories of suppliers e.g. in the example office requisites suppliers. The "favourites" screen, or sheet, provides integrated data from a plurality, suitably at least two, and preferably more than three, of separate or independent suppliers. Thus the user 3, 4 and 5 has a choice every time a purchase is made of accessing data from at least two suppliers 6, 7, 8, 9 n, thereby allowing for "shopping around" and obtaining the best price. Thus financial benefits are achieved by the user every time an order is placed and a purchase made. As soon as ordering is commenced, an indicator such as a blue colour in the basket 41 is updated changing to an indicator such as orange. When the order is completed, the basket 41 is updated and the orange changes back to blue. Thus an operator at a user station 3, 4, 5 knows from a colour change that an order has been made.

With regard to the products 40, there is cross-referencing to between all suppliers 6, 7, 8, 9 .... n, so that the user can select and go to "order", 42, and when selected, a visual image of the product selected, and its relevant specifications are displayed, allowing the user to check that the correct product has been selected.

Thus the system 1 effectively does away with the need for a user to have a series of hard copy catalogues, one from each supplier. The user can effectively access each suppliers' catalogue directly from a user station 3, 4, 5 via the central computer or server 2 and be confident that cost savings are being made and the correct product is being ordered.

Once selected, the basket of products is submitted to order via 42. At this stage, the system 1, via the central computer/server 2, fragments the order into products from each individual supplier. If a budget is exceeded, the user can then "hold" a particular suppler, and a number can be submitted. Thus the financial total may change, and can be altered, all by the user at his place of business.

The fragmented order is then distributed via the system 2, and the non-held products will be delivered by the selected supplier 6, 7, 8, 9 ... n in a selected time frame and to a selected address, the respective selections being made and controlled by the user 3, 4, 5, who can also from his/her screen print out and order and individually confirm the order. This avoids duplication, and orders from non-authorised personnel. The user can check an order, and can select items, select items for return, and the quantity to be returned.

The help desk shown in Fig. 2 allows a user 3, 4, 5 to put in a message or outline a problem, advice on which or a cure for which is provided by the computer/server 2 without the need to trouble suppliers 6, 7, 8 9 ... n.

It will be understood that the system 1 avoids the need for a separate purchasing order department with a user 3, 4, 5 avoids the need for physical catalogues and provides a cost reduction on the system via the central computer/server 2 provider also can negotiate bulk discount rates over a whole range of products or services provided by suppliers 6, 7, 8, 9 ... n. The user can have access to these discounts by subscribing to the system and paying a fee to the central computer/server supplier or that supplier can record payment via the discount provided by suppliers 6, 7, 8, 9 ... n.

This is achieved by pre-negotiated prices and bulk buying power as a result of users' bulk buying power. Office efficiency can also be increased and paperwork reduced, while providing a continuous update or audit on "spend" in say a purchase department. The audit provides a complete analysis of the spend; tendering procedures are eliminated too.

The system can produce inbuilt controls with flexible cost-centre management, and moreover, within an organisation, there can be a central user or department use, or dedicated location use. The central supplier can also maintain a central check on all transaction prices, recover overcharges for a user so providing for effective and efficient running of a business using this system.

It will be understood that the term "product" used herein relates to both a physical object such as an item of office equipment, and to an intangible such as a service e.g. a financial transaction.

Individual favourites lists can be created right from the start for the typical list of product items the user orders.

With access to only one procurement system required to place any order, users quickly become familiar with its use. New catalogues will continually be added giving an ever wider range of buying opportunities to those companies that want to take advantage.

Dealing direct with manufacturers and major trade suppliers ensures that costs are minimised.

Encouraging staff to use only one point of ordering ensures that maverick and Petty Cash spending is eliminated and expenditure can be monitored and controlled.

Bringing the supplier and customer closer together and minimising the costs of doing business enables the cost savings to be passed on to members of the system.

With the reduction in staff numbers, few companies have any significant buying power that they are able to capitalize on. Joining a "buying club" such as the system described herein is now the accepted route to control buying costs without having additional specialist staff to undertake this work.

Few companies have the time, resources or interest to monitor the agreement after implementation whereas custcost.com is dedicated to reviewing emerging trends and to finding cheaper prices or alternative options.

Details of all past orders are held electronically so users can look queries up on-line rather than retain masses of past orders in case a query arises at a later date.

Since details of every order are held on-line, it is possible to analyse information in many ways at any time, present or future.

Tendering systems provide a set of prices at a given point in time. Without careful monitoring on an on-going basis, many of the benefits may be lost within a very short space of time.

Users can be set up on pre-agreed individual costs centers if required and given monthly budget limits to ensure that financial controls are adhered to. This provides little opportunity to code to the wrong cost center.

Users can be grouped together in any logical sequence that the company chooses, even though such users/departments may be geographically distributed.

The system 1 adds value for both customer and supplier.

In addition to the office CD based system and the on-line context sensitive Help facility, further help and support is also available usually from designated support teams. Indeed the systems has an inbuilt "Contact Us" option that can be accessed from anywhere in the systems.

Thus the systems allows companies to maintain tight control over their purchasing costs whilst providing a framework that can be used across the business.

The systems allows companies to keep control of the purchase order function and continually benefit from low prices that can only be achieved with significant buying power. Any relevant small management fee incurred to produce these benefits is vastly outweighed by the cost savings achieved.

## Claims

1. A computer based system for procuring a product or service, **characterised by** a central computer or server **characterised by** one or more remote user stations (3, 4, 5) with access to a data base (6, 7, 8, 9) stored on the computer or server (2), and by an electronic means for selecting for direct delivery a desired product or service from a data base (6, 7, 8, 9).

2. A system according to Claim 1, **characterised by** data relating to a user located at a particular user station (3, 4, 5), and by data relating to an address for delivery of product or service.

3. A system according to Claim 2, **characterised by** data relating to a range of characteristics of the particular desired product or service from the data base (6, 7, 8, 9).

4. A system according to Claim 1, **characterised by** the range of characteristics **characterised by** price ranges of a desired product or service.

5. A system according to Claim 4, **characterised by** means to fragment a particular characteristic of a desired product or service from a data base (6, 7, 8, 9).

6. A system according to Claim 5, **characterised by** the provision of data relating to a desired product or service in a plurality of said desired products or services each of which has a particular price associated therewith.

7. A system according to Claim 6, **characterised by** the particular price **characterised by** an optimum price for each particular product or service, and by means at a station (3, 4, 5) for a user to select a desired optimum price.

8. A system according to Claim 7, **characterised by** the means **characterised by** a mouse.

9. A system according to any preceding Claim, **characterised by** means to signify a particular desired product or service at a particular user station (3, 4, 5).

10. A system according to Claim 9, **characterised by** the signifying means **characterised by** a change in colour in a dedicated part of a screen at a user station.

11. A system according to any preceding Claim, **characterised by** an electronic catalogue or catalogues (38) of a range of products or services which are selectable at a user station.

12. A system according to any preceding Claim, **characterised by** an electronic shopping basket (41) for collection of a range of products or services at a user station.

13. A system according to any preceding Claim, **characterised by** an electronic means (43) for providing for return of a product or service to a central provider (2) thereby.

14. A system according to any preceding Claim, **characterised by** an electronic help desk means (10) accessible from the or each user station (3, 4, 5).

15. A system according to any preceding Claim, **characterised by** an electronic means for notifying a system error.

16. A system according to any preceding Claim, **characterised by** an electronic search facility, an order header facility and a selection facility, whereby when an order header is elected from a key field from an original order, order headers and selection criteria are matched and displayed, at the user station.

17. A system according to any preceding Claim, characterised for each category of product or service (6, 7, 8, 9), a plurality of levels thereof providing specific criteria relating thereto at each level.

18. A system according to any preceding Claim, **characterised by** an update of criteria relating to any particular product or service, accessible from a user station (3, 4, 5).

19. A system according to any preceding Claim, **characterised by** electronic means adapted to provide an indicator every time a transaction is actioned.

20. A system according to Claim 19, **characterised by** the indicator **characterised by** a colour change on a screen of a user at a particular user station.

21. A system according to any of Claims 1 to 20, **characterised by** payment of a central provider of the central computer by a source product or service supplier.

22. A system according to any preceding Claim, **characterised by** a subscription-based system whereby on payment of a subscription a user can access the system and acquire a product or service at an optimum price.
